# EUROPEAN PATENT SPECIFICATION

(11) **EP 0 542 358 B1**
(45) Date of publication and mention of the grant of the patent: **07.02.1996**
(21) Application number: 92203432.7
(22) Date of filing: 07.11.1992
(51) Int. Cl.: F16D 65/092, F16D 69/04

(54) **Brakes**
Bremsen
Freins

(30) Priority: 15.11.1991 GB 9124382
(43) Date of publication of application: 19.05.1993
(73) Proprietor: FERODO LIMITED, Manchester M3 2NL (GB); BRITISH RAILWAYS BOARD, London NW1 1DZ (GB)
(72) Inventor: Dolbear, Keith David, Buxton, Derbyshire SK17 9SL (GB); Beamond, Trevor Wyn, Matlock, Derbyshire DE4 5EG (GB); Schofield, Kerry Graham, Breadsall, Derbyshire DE2 4GD (GB)
(74) Representative: Gibson, George Kevin

(56) References cited:
- EP-A- 0 423 057
- DE-A- 3 734 289
- US-A- 3 231 058

## Description

This invention relates to brakes, and more particularly to a method of manufacturing brake elements comprising linings secured to backing plates, such as brake blocks, or brake pads.

For example, a brake pad is mounted in a carrier and is slidable forwards and backwards along a guideway in the carrier into and out of a working position in which it can be locked, for engagement with the moving element of a brake system to be retarded or stopped. Such pads are used in rail vehicle brake systems, but are in principle usable elsewhere, for example in heavy goods road vehicles. When a lining has become worn or otherwise defective, then by releasing the lock the pad can be slid backwards along the guideway and so withdrawn from the carrier; replacement of a fresh pad is thus facilitated.

It is an object of the present invention to provide a novel and advantageous method of manufacturing brake elements comprising linings secured to backing plates, such as brake blocks, or brake pads. It is also an object of the present invention to provide novel and advantageous brake elements manufactured by such a method. Thus, hot-spotting of and thermal damage to the surface of a moving element, such as a rotary element, which it retards or stops when engaged therewith are reduced. Additionally, wear of the lining itself may be reduced compared with known forms of such linings.

According to one aspect of the invention there is provided a method of manufacturing a brake element including forming a lining (1) in a die, and the lining includes a layer of elastomeric material (3) secured to a backing plate and cured in the die, the layer of elastomeric material is interposed between friction material (4) of the lining and the backing plate, and the cured elastomeric material is softer than the friction material, the method being characterised by mounting a plurality of discrete portions of the friction material (4) in the die, and then placing a composition from which the layer of elastomeric material is obtained in the die, so that there is obtained a lining having the plurality of discrete portions of friction material embedded in the layer of elastomeric material, all the portions extending to a working surface (2) of the lining remote from the backing plate, and in the layer of elastomeric material the portions being spaced apart from each other.

According to another aspect of the present invention a brake element comprises a lining (1) secured to a backing plate, the lining includes a layer of elastomeric material (3) secured to the backing plate, the layer of elastomeric material being interposed between friction material (4) of the lining and the backing plate, and the elastomeric material is softer than the friction material, characterised by the friction material comprising a plurality of discrete portions (4) embedded in the layer of the elastomeric material, with all the portions being spaced apart from each other, and the portions extending to a working surface (2) of the lining remote from the backing plate.

It may be that the improved properties resulting from this construction for such a brake element are a result of the layer of elastomeric material making the lining more conformable to the working surface of the moving element, compared with known forms of such linings, and so that the two surfaces engage more uniformly.

Preferably the elastomeric layer has a Rockwell value of a depth of penetration (using a Rockwell hardness machine) at least twice that of the friction material.

The friction material may have a composition including a polymeric binder together with reinforcing fillers and/or binders, and may be entirely conventional, such as for example that described in US 3,227,249; or, if the non-asbestos kind is desired, that described in GB 1,604,827; and may also include fibres.

The elastomeric layer may likewise vary widely in composition, provided that it is not cured to a degree beyond that at which it becomes so cross-linked as to lose its softness relative to that of the friction material. Thus, there may be used the compositions described in Ferodo Limited GB 1 249 922 as being suitable for the manufacture of non-squeal railway brake blocks for direct engagement with the external periphery of a rail vehicle wheel.

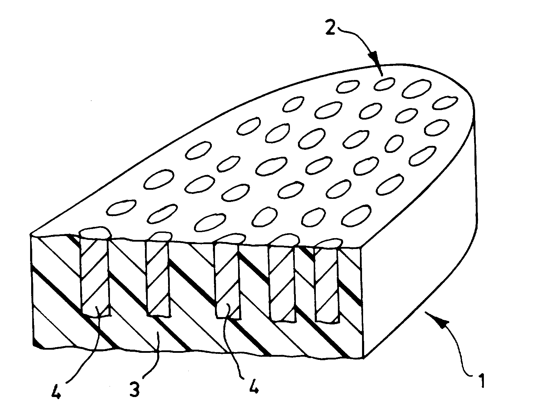

The invention will now be further described with reference to the Example; and to the accompanying drawing, comprising an isometric section of a lining of a brake pad, the lining having a surface that is essentially flat, and is to engage a moving element, and is secured to a metal backing plate.

The illustrated lining 1 is for a brake pad (not shown), which brake pad is in two parts, each part having a lining secured to a metal backing plate of dovetail cross-section. The lining 1 has a surface 2 remote from the backing plate, which surface is essentially flat, and is to be engaged by a moving element to be retarded or stopped. The moving element to be retarded or stopped may comprise the disc of a disc brake system. The backing plate is keyed to the lining 1 by tongues pressed out of the plane of the plate, leaving apertures therein. The surface 2 of the lining 1 is conventionally grooved, the grooving not being shown, but being both transverse and longitudinal.

### Example

1. A metal backing plate is shot-blasted to clean it, and adhesive of the kind conventionally used for direct bonding of the lining is applied to the plate and allowed to dry off during 12 hours.
2. An uncured mix of a conventional friction material, as referred to above, is put into a die, and a block of the friction material is obtained. The block is cut into the discrete portions, and these portions of friction material are mounted spaced apart from each other in a pressing die, in locations relative to each other desired for the portions within a lining. This die has the shape of a half-pad, and the required friction brake half-pad is then obtained by putting the composition from which an elastomer layer is obtained into the pressing die. The elastomer comprises :- 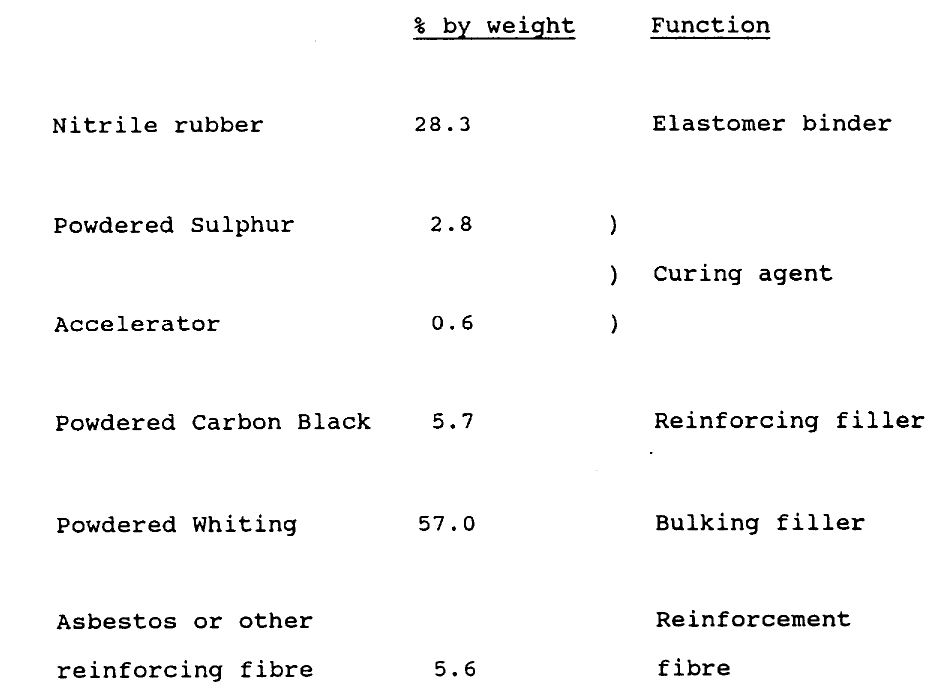 The above composition is employed in particulate form: first its ingredients are mixed in a Banbury mixer, and the resulting unitary mass is then disintegrated.
3. The metal backing plate is superimposed on the elastomer layer, and the assembly is pressed under a pressure of 85 megaPascals, at ambient temperature for 10 seconds.
4. The assembly is baked in an air-circulation oven for 4 hours at 150°C to cure the layer of elastomer composition. Baking is carried out in packs with metal inserts to prevent undue compression of the elastomeric layer during its cure. Any exudate of elastomer at the assembly sides is then removed by machining.
5. The baked assembly is finally ground to a total thickness of 18 millimetres, and grooves are then cut in the exposed surface by conventional procedure.

Typical Rockwell values (ball diameter 2.54 centimetres, with 30 kilograms major load) are: for the friction material, 0.20 millimetre penetration (a Shore D value of 75); and for the elastomeric layer > 0.30 millimetre penetration (a Shore D value < 50).

Thus, as shown, the lining 1 comprises a layer 3 of the elastomeric material having embedded therein a plurality of separated portions 4 of the friction material. The portions 4 extend to the surface 2 of the lining 1 remote from the backing plate (not shown).

A brake element manufactured in accordance with the present invention may comprise part of a brake block.

## Claims

1. A method of manufacturing a brake element including forming a lining (1) in a die, and the lining including a layer of elastomeric material (3) secured to a backing plate and cured in the die, the layer of elastomeric material being interposed between friction material (4) of the lining and the backing plate, and the cured elastomeric material being softer than the friction material, the method being characterised by mounting a plurality of discrete portions of the friction material (4) in the die, and then placing a composition from which the layer of elastomeric material is obtained in the die, so that there is obtained a lining having the plurality of discrete portions of friction material embedded in the layer of elastomeric material, all the portions extending to a working surface (2) of the lining remote from the backing plate, and in the layer of elastomeric material the portions being spaced apart from each other.

2. A brake element comprising a lining (1) secured to a backing plate, the lining including a layer of elastomeric material (3) secured to the backing plate, the layer of elastomeric material being interposed between friction material (4) of the lining and the backing plate, and the elastomeric material being softer than the friction material, characterised by the friction material comprising a plurality of discrete portions (4) embedded in the layer of the elastomeric material, with the portions being spaced apart from each other, and all the portions extending to a working surface (2) of the lining remote from the backing plate.

## Patentansprüche

1. Verfahren zur Herstellung eines Bremsenelementes, bei dem ein Futter (1) in einem Gesenk geformt wird und das Futter eine Schicht aus elastomerem Material (3) aufweist, die an einer Trägerplatte befestigt ist sowie in dem Gesenk gehärtet wird, wobei die Schicht aus elastomerem Material zwischen Reibmaterial (4) des Futters und der Trägerplatte angebracht ist und das ausgehärtete elastomere Material weicher als das Reibmaterial ist, wobei das Verfahren **dadurch gekennzeichnet** ist, daß eine Vielzahl diskreter Bereiche des Reibmaterials (4) in dem Gesenk angebracht werden und anschließend ein Materialgemisch eingebracht wird, aus dem die Schicht aus elastomerem Material in dem Gesenk derart erhalten wird, daß dort ein Futter mit der Vielzahl diskreter Bereiche aus in die Schicht aus elastomerem Material eingebettetem Reibmaterial erhalten wird, wobei alle Bereiche sich zu einer Arbeitsfläche (2) des Futters erstrecken, die von der Trägerplatte entfernt ist, und wobei in der Schicht aus elastomerem Material die Bereiche voneinander beanstandet angeordnet sind.

2. Bremsenelement mit einem Futter (1), das an einer Trägerplatte befestigt ist und eine Schicht aus elastomerem Material (3) aufweist, das an der Trägerplatte befestigt ist, wobei die Schicht aus elastomerem Material zwischen Reibmaterial (4) des Futters und der Trägerplatte angebracht und das elastomere Material weicher als das Reibmaterial ist, **dadurch gekennzeichnet**, daß das Reibmaterial eine Vielzahl diskreter Bereiche (4) umfaßt, die in die Schicht aus dem elastomerem Material eingelagert sind, wobei diese Bereiche jeweils voneinander beabstandet angeordnet sind und alle Bereiche sich bis zu einer Arbeitsfläche (2) des Futters erstrecken, die von der Stützplatte entfernt ist.

## Revendications

1. Procédé de fabrication d'un élément de frein comprenant les opérations consistant à former une garniture (1) dans une matrice, et la garniture comprend une couche de matériau élastomère (3) fixée à une plaque de support et durcie dans la matrice, la couche de matériau élastomère est disposée entre un matériau de friction (4) de la garniture et la plaque de support, et le matériau élastomère durci étant plus tendre que le matériau de friction, le procédé étant caractérisé en ce qu'est montée une pluralité de portions discontinues du matériau de friction (4) dans la matrice, puis est placée une composition à partir de laquelle la couche de matériau élastomère est obtenue dans la matrice, de manière à obtenir une garniture comportant la pluralité de portions discontinues de matériau de friction enrobées dans la couche de matériau élastomère, toutes les portions s'étendant jusqu'à une surface de travail (2) de la garniture loin de la plaque de support, et dans la couche de matériau élastomère les portions étant espacées les unes des autres.

2. Elément de frein comprenant une garniture (1) fixée à une plaque de support, la garniture comprenant une couche de matériau élastomère (3) fixée à la plaque de support, la couche de matériau élastomère étant disposée entre le matériau de friction (4) de la garniture et la plaque de support, et le matériau élastomère étant plus tendre que le matériau de friction, caractérisé par le matériau de friction comprenant une pluralité de portions discontinues (4) enrobées dans la couche de matériau élastomère, avec toutes les portions étant espacées les unes des autres, et les portions s'étendant jusqu'à une surface de travail (2) de la garniture loin de la plaque de support.
